Europäisches Patentamt

European Patent Office

Office européen des brevets

(19)

(11) EP 0 708 246 A2

(12) **EUROPEAN PATENT APPLICATION**

(43) Date of publication:
24.04.1996 Bulletin 1996/17

(51) Int. Cl.⁶: **F04D 5/00**, G01F 5/00

(21) Application number: 95111883.5

(22) Date of filing: 28.07.1995

(84) Designated Contracting States:
CH DE FR GB LI

(30) Priority: 05.10.1994 DE 4435627

(71) Applicant: **Hewlett-Packard GmbH**
**D-71034 Böblingen (DE)**

(72) Inventors:
• **Härtl, Hans-Georg**
**D-76227 Karlsruhe (DE)**
• **Wenger, Ulrich**
**D-76228 Karlsruhe (DE)**

(74) Representative: **Harbach, Thomas**
**c/o Hewlett-Packard GmbH,**
**Herrenberger Strasse 130**
**D-71034 Böblingen (DE)**

(54) **Pump assembly**

(57) A pump assembly comprises a pump with a stationary component (20) and a movable component (10) opposite thereto, which form a substantially wedge-shaped sliding space (50) among each other, in which sliding space a hydrodynamic supporting fluid film with a pressure distribution can build up during operation, with the stationary component (20) comprising an inlet arrangement (30) and an outlet arrangement (40), with the inlet arrangement (30) extending to an area of low pressures of the pressure distribution (110) in the sliding space (50), and with the outlet arrangement (40) extending to an area of high pressures of the pressure distribution (110) in the sliding space (50). A flow sensor produces a flow signal representing the volumetric flow rate of the flow generated by the pump. The flow signal is supplied to a comparator for comparing it with a nominal flow signal and for providing a control signal to an adjustable loading unit for the adjustable loading of the pump to provide an outflow of the pump according to the nominal signal.

FIG. 1C

EP 0 708 246 A2

Printed by Rank Xerox (UK) Business Services
2.11.3/3.4

## Description

### FIELD OF THE INVENTION

The present invention relates to a pump assembly. In particular, the present invention relates to a pump assembly comprising a pump, wherein hydrodynamic sliding bearings are acting as pressure and flow generators, in order to generate a fluid flow which has little or no pulsations, and in order to generate precise volume flow in combination with a fluid sensor.

### DESCRIPTION OF THE PRIOR ART

In hydraulics, the delivery of fluid media and the provision of energy can be achieved by pumps of different designs. The energy of fluids is determined by the adjustment of the pump pressure.

Known pumps are, for example, fluid-flow pumps, or displacement pumps, wherein the displacers may be rigid, elastic, or liquid, or gaseous . There are oscillating displacers (for example, reciprocating and diaphragm pumps), rotating displacers (for example, gear pumps, vane pumps, and screw pumps).

In existing pump systems, optimum material pairings have to meet high demands at several locations, for example with the piston seals, the check valves and the rotary slide valves, the various diaphragms, etc. If a high volumetric efficiency is required, many geometrically complicated and highly precise parts made of high-grade and expensive materials are required. Furthermore, special mechanisms are required for damping the inherent, partially high pulsations of the delivered fluid. An additional disadvantage is the high sensitivity of existing pump systems to dirt particles, and the additional release of dirt particles.

### SUMMARY OF THE INVENTION

Based on the prior art, it is an object of the invention to create a pump assembly for delivering fluid with little or no pulsations, even at small flow rates as they are usual in a pump for high pressure liquid chromatography.

According to the invention, this object is achieved by a pump assembly according to claim 1.

The present invention provides a controlled pump assembly comprising a stationary component and a movable component opposite thereto, which form a substantially wedge-shaped sliding space among each other. A hydrodynamic supporting fluid film with a pressure distribution can build up in the sliding space during operation. The stationary component comprises an inlet arrangement and an outlet arrangement, with the inlet arrangement extending to an area of low pressures of the pressure distribution in the sliding space, and with the outlet arrangement extending to an area of high pressures of the pressure distribution in the sliding space. The delivery of the pump assembly is controlled by means of a flow sensor producing a flow signal representing the volumetric flow rate of the generated flow, a comparator for comparing the produced flow signal with a nominal flow signal and for forming a difference signal, and an adjustable loading unit for the adjustable loading of the pump according to the difference signal for adjusting the flow according to the nominal flow signal.

According to a preferred embodiment, the flow sensor comprises an essentially linear flow restrictor which is arranged in the fluid flow, a differential pressure sensor which is arranged in parallel to the flow restrictor and which produces a differential pressure signal, a pump means which is arranged in parallel to the flow restrictor and the differential pressure sensor and which is constructed such that it is capable of superimposing an alternating flow on the flow to be measured. Furthermore, a volumetric flow rate determination means is provided which derives a quantity representative of a fluid property from the alternating differential pressure signal which is generated by the differential pressure sensor and which is essentially proportional to the alternating flow, and which derives the volumetric flow rate from the steady component of the differential pressure signal generated by the differential pressure sensor as well as from the quantity representative of the fluid property.

It is an advantage of the invention that substantially smaller flow rates than with prior art pump assemblies can be achieved and that the delivered fluid is substantially free of pulsations. This makes the pump assembly particularly suited for a high pressure liquid chromatography pump. Since the pump assembly according to the invention provides for pulsation-free delivery, a pulsation damper is not required. This has the advantageous consequence in a liquid chromatography pump that the system dead volume (which would be increased by a pulsation damper), can be kept small. The lack of a pulsation damper also allows to increase the rate of change of the pumping conditions in a chromatographic pump system. As the pump assembly of the invention does not require seals, a more reliable operation is ensured than with prior art pumps and the costs are reduced relative thereto. A further factor contributing to reduced cost is the geometrically simple design. The pump assembly of the invention is generally characterized by its high reliability and its safety of operation.

A further advantage is that the special design of the flow sensor ensures that the measurement is substantially independent of the properties of the fluid to be measured, such as its viscosity. This is particularly important in liquid chromatography. With the inventive measuring principle (difference pressure measurement), substantially faster measurements than with thermal or capacitative measuring techniques are possible. Due to the measuring principle and the high manufacturing accuracy (in particular with micromechanical manufacturing methods), a high measuring reproducibilty can be achieved. The manufacturing cost is particularly low when micromechanical manufacturing techniques (batch production, bonding, etc.) are used. Furthermore, the use of micromechanical methods allows to produce much smaller sensors than in the prior art.

The stationary component and the movable component in the pump assembly of the invention form a sliding bearing. The sliding bearing comprises means for providing a load thereto. The type of material used for the stationary component and for the movable component are practically irrelevant, because the moving sliding faces are in the state of fluid friction when the desired state of friction is reached. By varying the load of the bearing, it can be achieved that the solid sate friction during starting and stopping of the bearing and thus wear are virtually inexistent.

According to the invention, the leakage occurring during operation of the sliding bearing becomes irrelevant, because the pump is used in conjunction with a flow sensor, a comparator, and an adjustable loading unit for delivery of a precise volumetric flow. Such a controlled pump assembly is suitable for use in high pressure liquid chromatography systems, since materials can be used which on one hand are resistant against all solvents in the pH range between 2,3 and 9,5 which are typically used in such systems, and which on the other hand have good workability. It is understood that the pump assembly of the invention can be used in other technical applications where there are similar requirements, for example with injection pumps.

It is another advantage of the invention that the pump does not require control elements, such as valves, thus making the pump assembly insensitive to contaminations . A further advantage is the substantially wear-free operation, whereby no contaminating particles are released during operation of the pump itself. It is therefore not necessary to apply special measures for filtering the solvent. Furthermore, due to the very low friction coefficients of $\mu = 0.005$ to $\mu = 0.001$, good efficiency and low heat generation of the bearing during operation are achieved.

In particular if the pump assembly of the invention is designed as a radial bearing, simple geometric arrangements can be achieved which permit to manufacture highly precise pumps. The design and dimensioning of such pumps for a specific operating range can be performed precisely, because the hydrodynamic effect can be well treated mathematically.

A particularly advantageous embodiment is a pump assembly designed as a radial tilting pad bearing. This embodiment ensures a substantially wear-free operation and very low heating in the sliding space. Furthermore, the tilting pads can be selected such that a desired pressure profile is achieved, leading to a high versatility.

In an axial bearing, the wedge-shaped sliding space can be formed through the geometric design of the components (sliding spaces). In a radial bearing, the wedge-shaped sliding space can be formed by geometric design of the spaces, by plastic deformation of a component or, when using round components, by eccentric arrangement of the parts relative to each other.

In a preferred embodiment of the invention, the differential pressure sensor is provided with a first diaphragm having an opening which extends through said first diaphragm at right angles to the main surfaces thereof, said first diaphragm being provided with first elements for measuring the diaphragm deflection.

In another preferred embodiment of the invention, the pump means is provided with second and third diaphragms and with first and second actuating members arranged on one side of the respective diaphragm, said actuating members being used for actively deflecting said second and third diaphragms and said second and third diaphragms being provided with second and third elements for measuring the diaphragm deflection.

In a further preferred embodiment of the invention, the first, second and third elements for measuring the diaphragm deflection include one strain gauge or several strain gauges.

In a further preferred embodiment of the invention, the first and second actuating members are controlled with an 180o phase shift for achieving thus a movement of the second and third diaphragms in opposite directions.

In a further preferred embodiment of the invention, a first chamber is defined by the first and second diaphragms and a sensor housing; a second chamber is defined by the first and second diaphragms and the sensor housing; the first and the second chambers are interconnected via the flow restrictor; a means is provided for supplying the fluid to be measured to the first chamber, and a means is provided for discharging the fluid to be measured from the second chamber.

In a further preferred embodiment of the invention, the sensor housing is provided with a flow passage for defining the flow restrictor, said flow passage extending from the first chamber along one main side of the first diaphragm through the opening of said first diaphragm and along the other main side of said first diaphragm to the second chamber.

In a further preferred embodiment of the invention, the sensor housing has a structural design of such a nature that the free diaphragm surface of the second and third diaphragms is larger than that of the first diaphragm.

In a further preferred embodiment of the invention, the supply means includes an inlet capillary leading through a cover portion and the sensor housing into the first chamber; and the discharge means includes an outlet capillary leading through the sensor housing and the cover portion and then out of the second chamber.

In a further preferred embodiment of the invention, the first and second actuating members of the pump means have the following features: a first rear wall consisting of a thermally conductive material, said first rear wall being arranged on one lateral surface of the sensor housing and having a plurality of ribs; a second rear wall consisting of a thermally conductive material, said second rear wall being arranged on the other lateral surface of the sensor housing and having a plurality of ribs; a third chamber defined by the second diaphragm, the first rear wall and the sensor housing, said third chamber containing a liquid; a fourth chamber defined by the third diaphragm, the second rear wall and the sensor housing, said fourth chamber containing a liquid; and first and second Peltier elements for cyclically heating and cooling down the liquids contained in the third and fourth chambers.

In a further preferred embodiment of the invention, the first and second actuating members of the pump means each include a piezoelectric actuating element.

In a further preferred embodiment of the invention, the first and second actuating members of the pump means each include a piston which is moved by magnetic fields.

In another preferred embodiment of the invention, the first and second actuating members of the pump means are provided with chambers which are acted upon by a pressure.

In a further embodiment of the invention, the desired pumping effect of the pump means of the flow sensor is achieved by electrical heating followed by natural cooling.

## BRIEF DESCRIPTION OF THE DRAWINGS

Preferred embodiments of the present invention will subsequently be explained with reference to the drawings, wherein:

Fig. 1A    shows a radial bearing as well as the pressure distribution in the bearing without a delivery from the fluid layer;

Fig. 1B    shows a radial bearing as well as the pressure distribution in the bearing during delivery from the fluid layer;

Fig. 1C    shows an embodiment of an essential part of a pump according to the present invention;

Fig. 2    is a pressure/volume flow characteristic curve of the pump according to an embodiment of the invention;

Fig. 3    is a schematic diagram of the controlled pump assembly according to the present invention;

Fig.4    is a schematic representation of a tilting pad bearing used in a further embodiment of the invention;

Fig.5A    shows a pumping assembly of the invention based on a tilting pad bearing according to Fig. 4;

Fig.5B    is a cross-sectional view along the line A-A in Fig. 5A;

Fig. 6    is a schematic representation of a flow sensor used in a preferred embodiment of the invention;

Fig. 7    shows a graph which, on the basis of some examples, shows the dependence of the sensor signal on the viscosity of the fluid;

Fig. 8    shows a graph which corresponds to the graph of Fig. 7 and which shows how a small alternating flow introduced is transformed into a pressure signal which is proportional to the fluid properties;

Fig. 9    shows a sectional view of an embodiment of a fluid sensor used in an embodiment of the present invention;

Fig. 10    shows a block diagram of a device which uses the fluid sensor according to the invention for determining the viscosity of a fluid and the volumetric flow rate of a fluid, respectively.

## DESCRIPTION OF THE PREFERRED EMBODIMENTS OF THE INVENTION

Before describing a preferred embodiment of the pump according to the invention, the working principle of a radial bearing, which is used in the preferred embodiment of the invention, will briefly be explained.

Fig. 1A shows a radial bearing which is labelled as a whole with the reference numeral 100, together with the corresponding typical pressure distribution. During operation of an axial or radial sliding bearing, a hydrodynamic supporting liquid (fluid) film builds up, primarily dependent on the bearing load, said liquid film balancing the bearing load. A pure liquid friction, which is necessary for the operation of the bearing as a pump, is present, if, due to a sliding space (area between the rotor and the shaft) or several sliding spaces narrowing in the direction of motion, the sliding surfaces are pushed apart due to liquid compression to such an extent that there is no more contact between the sliding surfaces.

A pressure distribution 110 builds up in the supporting liquid layer in the sliding space 50 between a movable component 10 and a stationary component 20. This typical and known pressure distribution comprises a pressure maximum. The average pressure of the pressure distribution of radial bearings is calculated according to the equation $pL = F/(b \times d)$, wherein F is the bearing load, b is the bearing width, and d is the diameter of the bearing. The pressure maximum lies approximately in a range of $pmax = (2...10) \times pL$.

By providing one or several delivery holes in the stationary component 20 at the location of the pressure maximum, liquid can be delivered from the supporting liquid layer out of the sliding space 50. When delivering liquid from the supporting liquid layer out of a small delivery hole in the stationary component 10 at the location of the pressure maximum, the pressure distribution 120 shown in Figure 1B results. The pressure present at the one or several delivery holes can be regulated by a variable loading of the radial sliding bearing.

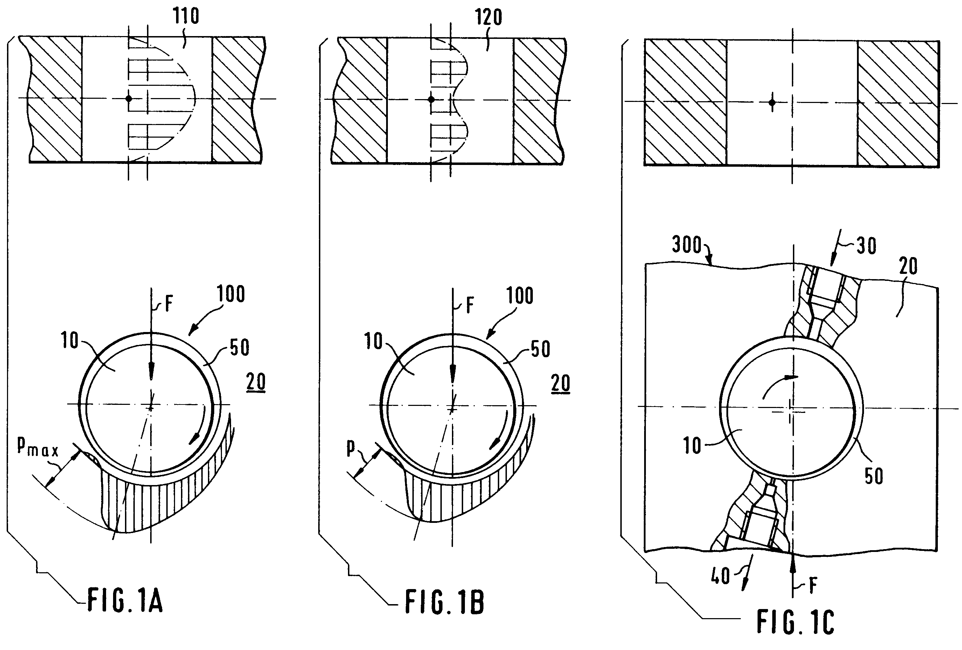

Fig. 1C shows a pump in the form of a hydrodynamic radial sliding bearing with the movable component 10, the stationary component or bearing 20, an inlet 30, an outlet 40 and the sliding space 50. In an embodiment, the movable component 10 comprises a shaft which may be made of, for example, stainless steel, with the shaft being rotatably carried (statically) in a load bearing assembly formed by two bearing blocks with ball bearings, and being driven by a flexible shaft (not shown).

A variable spring force F may be exerted on the bearing by an arrangement for providing a bearing load, such as a lever. The current bearing load can be displayed, for example, on a scale (not shown).

At the bearing surface, a small delivery hole with a diameter of 0,25 mm and the connection for a hydraulic capillary are arranged at the location of the expected maximum pressure. These components form the outlet arrangement 40. At the side opposite to the location of maximum pressure, in the region of the largest distance between bearing and shaft, i.e. in the region of smallest pressure, a hole is located which has a diameter of 1,7 mm. This hole serves as an inlet arrangement for supplying liquid.

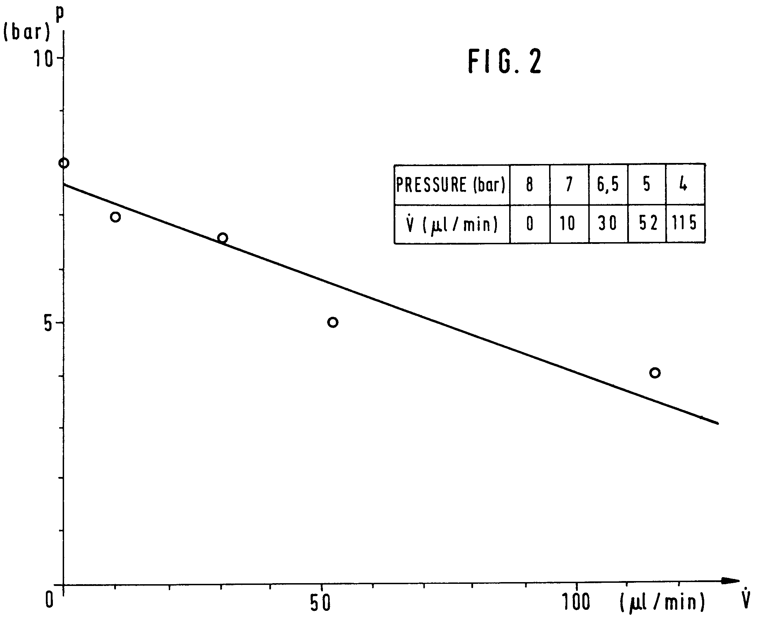

Fig. 2 shows a pressure/volume flow characteristic curve of a radial sliding bearing acting as a pump. In this example, the used radial sliding bearing had a bearing width of 18 mm, a bearing diameter of 20 m and a bearing clearance of 0,025 mm. The rotational speed was 4000 1/min. At a bearing load of about 240 N, the resulting mean pressure was 6.6 bar. Furthermore, the surface was precision turned (Ra about 0,4 to 3,2 $\mu$m). The surface of the shaft was ground (Ra about 0,05 to 0,4 $\mu$m). The used medium for delivery was Isopropanol (2,3 mPa · s).

Further improvements of the results can be achieved, for example, with a smaller bearing clearance (about 0,01 mm) and a substantially smaller roughness of the sliding surfaces, in particular of the bearing. As expected, due to the hydrodynamic effect, substantially higher delivery pressures can then be achieved at possibly somewhat reduced delivery flow rates.

For obtaining the characteristic curve shown in Figure 2, the delivery pressure and thus also the delivery volume flow was adjusted by means of a variable restrictor, as described in US-A-5,009,778, in connection with a pressure transducer and a control unit. The delivered liquid flow was determined by metering.

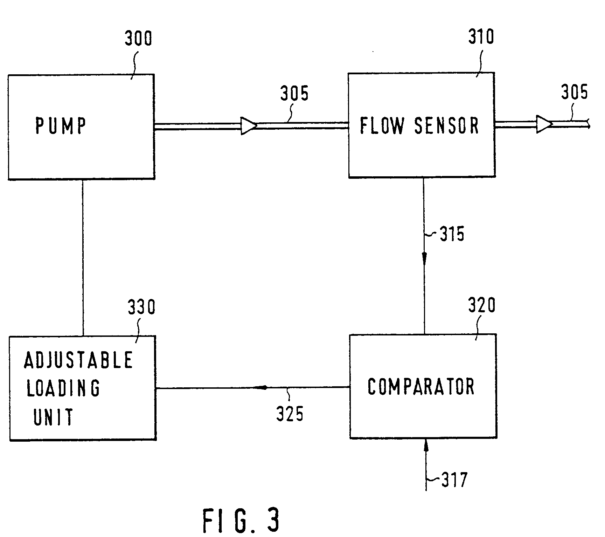

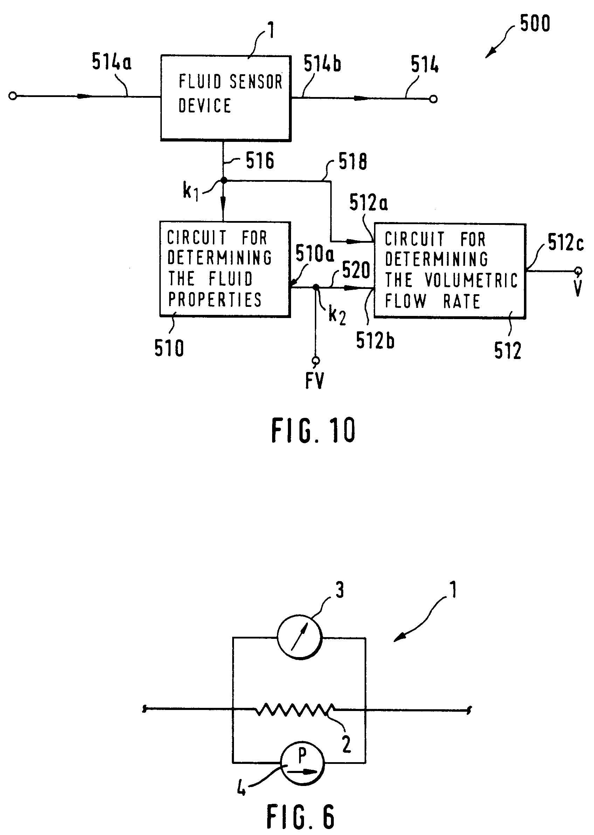

Fig. 3 shows a schematic representation of a controlled pump assembly with a pump 300 according to the present invention. The flow 305 generated by the pump 300 is supplied to a flow sensor 310. The flow sensor 310 produces a flow signal 315 corresponding to the liquid flow. This flow signal is supplied to a comparator 320, where it is compared to a nominal flow signal 317. As a result of this comparison, a difference signal 325 is produced which is supplied to an adjustable loading unit 330. The load for the bearing of pump 300 is adjusted according to the difference signal 325 via the adjustable loading unit 330. Through this control loop, the flow generated by pump 300 can be precisely adjusted. Due to the use of the control loop, fluctuations of liquid leakage become irrelevant. A preferred embodiment of the flow sensor will be described below with reference to Figures 6-10.

The controlled pump assembly according to the invention can be used advantageously in liquid chromatography where it is necessary to know the precise amount of the displaced and delivered liquid, i.e. of the solvent. The pump assembly according to the invention provides for the required pulsation-free (or substantially pulsation-free) liquid delivery.

In the following, further variations of the invention will be described. With a statically loaded radial sliding bearing according to Fig. 1 A and 1B, it is possible to arrange several narrowing sliding spaces between the bearing and the shaft. Such narrowing sliding spaces, which are required for the formation of a pressure wedge, can be created by an elastic deformation of the bearing at one or several locations at the bearing surface relative to the shaft. Thus, each of the resulting pressure maxima can be used for the delivery of liquid, for example solvent.

Furthermore, there are a plurality of possibilities to dimension and to arrange holes for the delivery of solvent at the bearing surface. The dimensioning and arrangement of the holes always has to be performed dependent on the desired delivery pressure and the desired delivery rate. For achieving a high delivery pressure at a low delivery rate, a small number of delivery holes or even only one delivery hole can be arranged at the bearing surface, which are located directly at the pressure maximum and disturb the supporting liquid film as little as possible to achieve still high load-bearing capacities. For achieving a high delivery rate of the pump at a small delivery pressure, several holes can be arranged at the bearing surface, which do reduce the load-carrying capacity by disturbances in the liquid film, but allow to deliver a larger amount of liquid.

Generally, it is important to disturb the flow in the liquid film as little as possible. Therefore, it is basically more advantageous to arrange a plurality of small holes, whose diameter is somewhat larger than the expected particle size in the liquid, than to arrange a small number of holes with larger diameters. In this connection, it is possible to select the diameters of the holes so small that only negligibly small dirt particles are delivered.

The inlet hole at the bearing surface can be designed such that the pump draws in automatically for placing new solvent into the bearing. For this purpose, however, it is necessary that the suction tube and the sliding space of the bearing are filled with liquid. Furthermore, several inlet holes can be provided at the bearing surface, in order to achieve a higher liquid throughput, whereby also a better cooling of the bearing can be achieved. The problem of supplying new solvent and feed-back of liquid lost by leakage is no longer existent, if the sliding bearing is operated directly in the liquid to be delivered.

Furthermore, by providing seals at the edges of the sliding bearings at which the pressure in the supporting liquid layer drops to ambient pressure, the pressure at the edges can be stabilized and the load-carrying capacity can thus be improved. In radial bearings, for example, wear-free labyrinth sealings can be used, whereas wear will occur when using axial seal rings or the like and dirt particles are released. In the substantially more difficult sealing of axial bearings, labyrinth seals and axial seal rings can also be used, whereby the same advantages and disadvantages result as with radial bearings.

Furthermore, the pump assembly according to the present invention can be designed for many areas in a large field of workings ranges by suitable dimensioning of all parameters. For example, simply by interaction of bearing diameter and bearing width, the radial sliding bearing can be designed on the one hand for high delivery pressures, and on the other hand for high delivery flow rates. Furthermore, by arranging several radial sliding bearings on a shaft, a high delivery pressure can be achieved on the one hand, and on the other hand an altogether high delivery rate. A small width/diameter ratio of the individual radial bearings, i.e. the bearing width is small as compared to the bearing diameter, yields high delivery pressures at a small delivery rate. With a parallel arrangement of the individual radial sliding bearings, it is thus possible to achieve a desired total flow.

The properties and advantages of the pump assembly according to the invention do not depend on a particular orientation of the pump in space. Varying ambient temperatures, which practically cause a change in viscosity of the pumping medium during operation, can be compensated by adaptation of various parameters, mainly of the rotational speed, with a control circuit as shown in Figure 3.

A pumping mechanism based on the hydrodynamic effect of sliding bearings can be realized when a converging (narrowing), wedge-shaped or sickle-shaped sliding space is created, wherein the liquid medium builds up due to the relative movement of the sliding partners, resulting in hydrodynamic pressure. This occurs in axial and radial sliding bearings and other related bearing designs.

The sliding bearing pump can be designed with an integrated motor : In this case, the rotating part, i.e. the shaft or a sleeve, is the rotor. The stationary part comprises windings for generating a rotary field. The rotating part can be carried completely frictionless in axial as well as in radial direction.

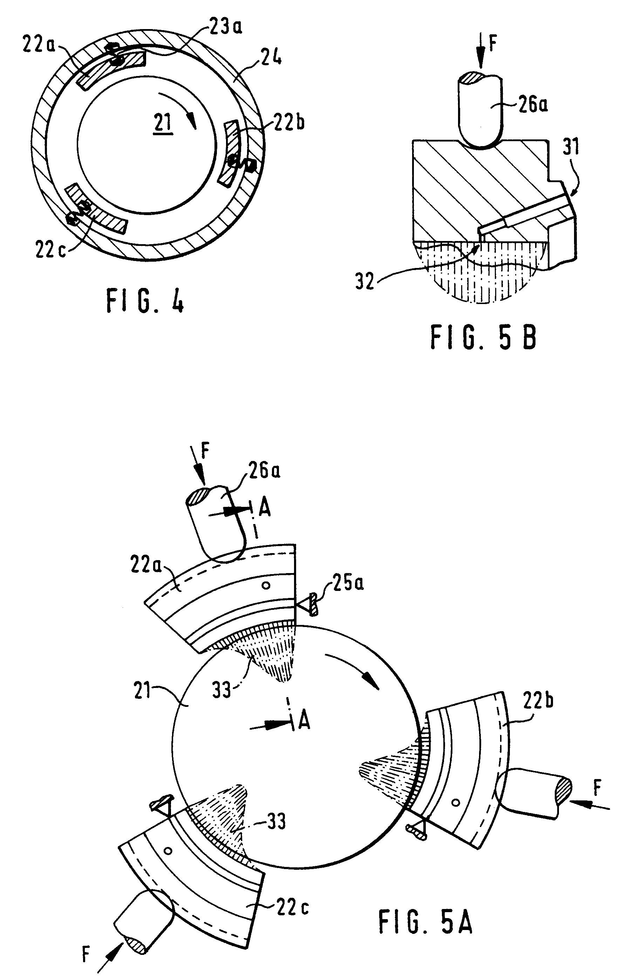

In the following, a further advantageous embodiment of the invention will be described with reference to Figures 4, 5A and 5B. The pump assembly according to this embodiment is based on a radial tilting pad bearing (or rocker segment bearing) the principle of which is shown in Fig. 4. A radial tilting pad bearing comprises a stationary part 24, a rotating shaft 21 and a plurality of tilting pads 22a-c. The load of the bearing is provided, for example, by resilient means associated with each tilting pad, such as spring 23a. The sliding face of the stator is thus divided into a plurality of sliding segments.

Fig. 5A shows in more detail a pump according to the invention based on a radial tilting pad bearing. The rotating shaft 21 is surrounded by three tilting pads 22a-c, each of which is supported by a support element, such as element 25a. The load on the individual tilting pads is provided by loading elements, such as element 26a, exerting a force F. The pressure distribution of the fluid in the beating is indicated by curve 33. Fig. 5B depicts a section along line A-A in Fig.5A, showing a delivery hole 32 and an outlet 31. The delivery hole 32 is located at the position of maximum pressure.

The pump according to Figures 5A and 5B has several advantages, such as :

- The bearing surfaces of the tilting pads enclose the shaft only partially. This results in reduced friction and heating in the sliding space.
- The automatic hydraulic centering of the shaft permits a theoretically wear-free operation.
- The tilting pads can be designed in a plurality of ways for suitably influencing the shape of the pressure profile and the position and magnitude of maximum pressure.
- The supply of liquid into the sliding space is achieved in a very simple and safe manner.
- The design provides for good stability and smooth running at high rotational speeds.

In the following, the flow sensor used in a preferred embodiment of a pump assembly according the invention will be described with reference to Figures 6-10.

Prior to discussing a preferred embodiment of the fluid sensor, the measuring principle of the present invention will be explained in detail with reference to Fig. 6-8.

Fig. 6 shows a fluid sensor according to the present invention designated generally by reference numeral 1. This fluid sensor 1 includes an essentially linear flow restrictor 2 which is arranged in a fluid flow to be measured. A differential pressure sensor 3, which produces a differential pressure signal, is connected in parallel to the flow restrictor 2. A pump 4 superimposing an alternating flow on the flow to be measured is arranged in parallel to the flow restrictor 2 and the differential pressure sensor 3. This alternating flow must be known so as to provide the possibility of a regular self-calibration of the sensor.

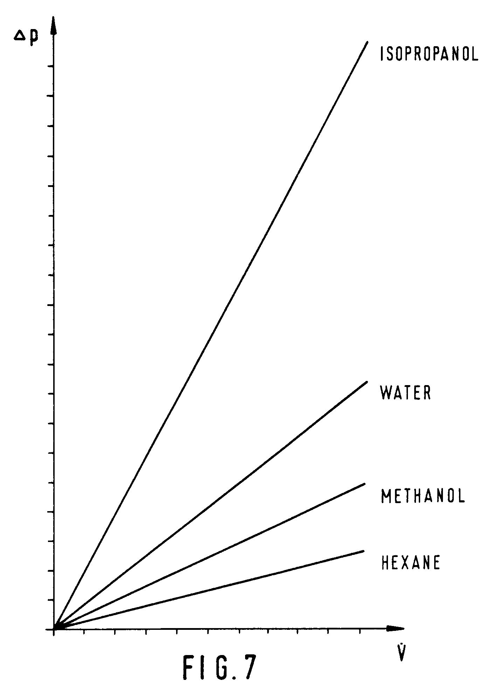

Fig. 7 shows the dependence of a sensor signal on the fluid viscosity on the basis of some examples, such as e.g. isopropanol, water, methanol or hexane. In practical operation, also arbitrary mixtures of fluids are used so that any ascending gradient between the characteristic curves shown is possible.

Viscosities which are higher or lower than those shown in Fig. 7 are possible as well. Hence, the user will not be able to predict the viscosity of the fluid used. The pressure difference $\Delta p$ across the fluid restrictor is calculated in accordance with the following equation:

$$\Delta p = \dot{V} \times k \qquad (1)$$

wherein k stands for a proportionality factor and $\dot{V}$ stands for the flow to be measured.

From the above it is evident that, in practice, the proportionality factor k mentioned in equation 1 is unknown.

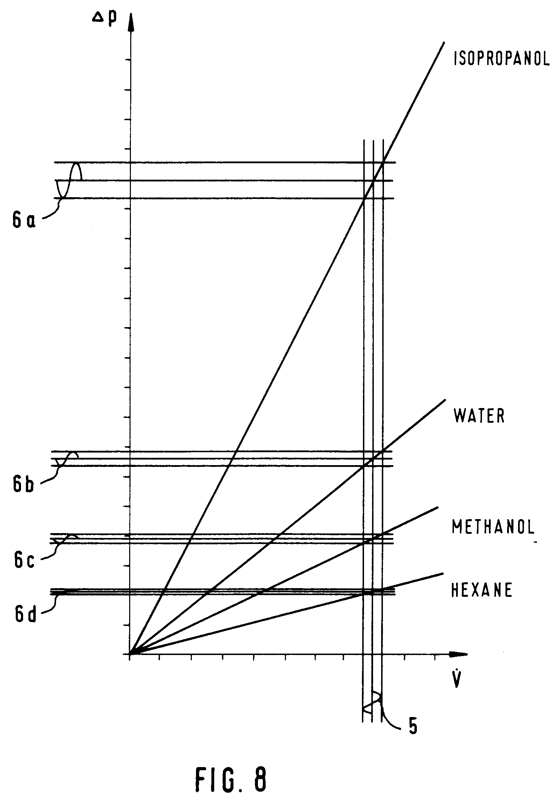

Fig. 8 shows the characteristic lines shown in Fig. 7, when an alternating flow 5 is superimposed on the flow $\dot{V}$ to be measured.

In view of the fact that the magnitude of the superimposed alternating flow 5 is known, the respective proportionality factor k for the fluid in question can be determined on the basis of the alternating flow representation 6a - 6d in the differential pressure signal $\Delta p$. This is done without any previous knowledge of the fluid properties of the fluid.

In order to guarantee a precise measurement, the fluid sensor and the system must be decoupled to a sufficient degree. This decoupling can be effected e.g. by flow restrictors located ahead of and behind the fluid sensor in the direction of flow.

Furthermore, the influence of the system on the fluid sensor must be ascertained and compensated for.

Insufficient coupling restrictions in combination with large system capacities will otherwise have the effect that the superimposed alternating flow 5 will not flow through the flow restrictor 2, but disappear fully or partly in the system.

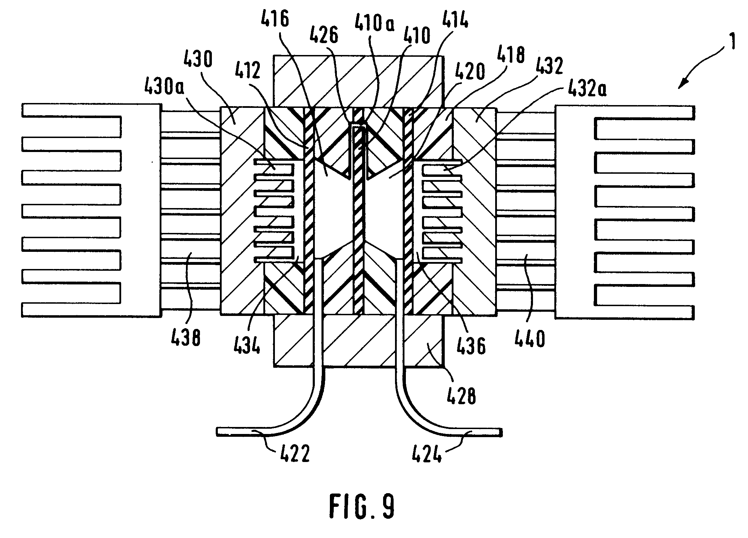

A preferred embodiment of the flow sensor will now be explained in detail with reference to Fig. 9.

As has already been described with reference to Fig. 6, the fluid sensor 1 according to the present invention comprises a flow restrictor 2, a differential pressure sensor 3 connected in parallel to said flow restrictor 2, and a pump 4 connected in parallel thereto.

Furthermore, the differential pressure sensor 3 comprises a first diaphragm 410 having a first opening 410a which extends through said diaphragm 410 at right angles to the main surfaces thereof. In addition, the first diaphragm 410 is provided with first elements which serve to measure the diaphragm deflection.

The pump 4 comprises second and third diaphragms 412, 414 and first and second actuating members. Said first and second actuating members are arranged on one side of the diaphragms 412, 414 and are used for actively deflecting the second and third diaphragms 412, 414. Just as the first diaphragm 410, the second and third diaphragms 412, 414 comprise second and third elements which serve to measure the deflection of the diaphragms 412, 414.

To the person skilled in the art it will be obvious that these first, second and third elements for measuring the diaphragm deflection may be provided with one or several strain gauges.

For producing the alternating flow 5 which is to be superimposed, the first and second actuating members are controlled with an 180° phase shift, and this has the effect that the second and third diaphragms 412, 414 will move in opposite directions.

As can be seen in Fig. 9, the fluid sensor 1 comprises a first chamber 416 defined by the first and second diaphragms 410, 412 and a sensor housing 418. A second chamber 420 is defined by the first and third diaphragms 410, 414 and the sensor housing 418. The first and second chambers 416, 420 are interconnected via the flow restrictor. The fluid sensor 1 is additionally provided with a means 422 for supplying the fluid to be measured to the first chamber 416 as well as with a means 424 for discharging the fluid to be measured from the second chamber 420.

In the embodiment of the fluid sensor 1 shown in Fig. 9, the sensor housing 418 is provided with a flow passage 426 for defining the flow restrictor 110. This flow passage 426 extends from the first chamber 416 along one main side of the first diaphragm 410 through the opening 410a of the first diaphragm 410 and along the other main side of the first diaphragm 410 to the second chamber 420.

The sensor housing 418 has a structural design of such a nature that the free diaphragm surface of the second and third diaphragms 412, 414 is larger than that of the first diaphragm 410. In the preferred embodiment of the fluid sensor 1 according to the present invention, the supply means 422 includes an inlet capillary leading through a cover portion 428 of the sensor housing 418 into the first chamber 416. Furthermore, the discharge means 424 includes an outlet capillary leading through the sensor housing 418 and the cover portion 428 and then out of the second chamber 420.

In the preferred embodiment of the fluid sensor according to the present invention, the first actuating member of the pump 4 has a first rear wall 430 consisting of a thermally conductive material, said first rear wall 430 being arranged on one lateral surface of the sensor housing 418 and having a plurality of ribs 430a. Furthermore, the second actuating member includes a second rear wall 432 consisting of a thermally conductive material, said second rear wall 432 being arranged on the other lateral surface of the sensor housing 418 and having also a plurality of ribs 432a. The second diaphragm 412, the first rear wall 430 and the sensor housing 418 define a third chamber 434. Furthermore, a fourth chamber is defined by the third diaphragm 414, the second rear wall 432 and the sensor housing 418. The third and fourth chambers 434, 436 each contain a liquid. In order to achieve the desired pumping effect of the pump 4, the first and second actuating members each include a Peltier element 438, 440 for cyclically heating and cooling down the liquid contained in the third and fourth chambers 434, 436.

To those skilled in the art it will be obvious that the first and second actuating members of the pump 4 may have different structural designs. The first and second actuating members may, for example each comprise a piezoelectric actuating element or a piston which is moved by magnetic fields.

Furthermore, the first and second actuating members may be defined by chambers which are acted upon by a pressure.

Furthermore, as an alternative to the use of Peltier elements described above, one can employ electrical heating of chambers followed by natural cooling to achieve the desired pumping effect. To perform electrical heating, a heating element such as a heater coil is provided. Such a design is particularly simple.

Whereas the structural design and the mode of operation of the fluid sensor 1 according to the present invention have been described hereinbefore with reference to Fig. 9, various devices making use of the sensor according to the present invention will be described hereinbelow with reference to Fig. 10.

Fig. 10 shows a block diagram with the fluid sensor 1, a circuit for determining the fluid properties 510 and a circuit for determining the volumetric flow rate 512. The fluid sensor 1 is arranged in a fluid flow 514, the fluid entering the fluid sensor 1 on one side 514a thereof and leaving it on the other side 514b thereof.

The output signal of the sensor 1 is supplied to the circuit 510 via a signal line 516, and via a node K1 and a second signal line 518 it is supplied to a first input 512a of the circuit 512.

In the circuit 510 for determining the fluid properties, a value representative of the viscosity is determined by a signal evaluation means on the basis of the alternating differential pressure signal which is generated by the differential pressure sensor 3 and which is essentially proportional to the alternating flow 300. Through the output 510a of the circuit 510, this value is supplied via the third signal line 520 to a second input 512b of the circuit 512, whereupon it is tapped via the node K2 as output signal FV.

The circuit 512 for determining the volumetric flow rate derives a quantity representative of a fluid property from the alternating differential pressure signal which is generated by the differential pressure sensor 3 and which is essentially proportional to the alternating flow, and it derives the volumetric flow rate $\dot{V}$ from the steady component of the differential pressure signal generated by the differential pressure sensor 120 as well as from the quantity FV which is representative of the fluid property. The value indicating the volumetric flow rate $\dot{V}$ is present at the output 512c of the circuit 512.

**Claims**

1.  A pump assembly , comprising

    a) a pump (300) for generating a flow (305), the pump comprising a stationary component (20) and a movable component (10) opposite thereto, which form a substantially wedge-shaped sliding space (50) among each other, in which sliding space a hydrodynamic supporting fluid film with a pressure distribution (110) can build up during operation, with the stationary component (20) comprising an inlet arrangement (30) and an outlet arrangement (40), with the inlet arrangement (30) extending to an area of low pressures of the pressure distribution (110) in the sliding space (50), and with the outlet arrangement (40) extending to an area of high pressures of the pressure distribution (110) in the sliding space (50),

    b) a flow sensor (310) for producing a flow signal (315) representing the volumetric flow rate of the generated flow;

    c) a comparator (320) for comparing the produced flow signal (315) with a nominal flow signal (317) and for forming a difference signal (325); and

    d) an adjustable loading unit (330) for the adjustable loading of the pump (300) according to the difference signal (325) for adjusting the flow according to the nominal flow signal (317).

2.  Pump assembly as in claim 1, wherein the flow sensor comprises :
    a fluid sensor (1) having, in turn, the following features:

    -   an essentially linear flow restrictor (2) which is arranged in the fluid flow;
    -   a differential pressure sensor (3) which is arranged in parallel to the flow restrictor (2) and which produces a differential pressure signal ($\Delta p$);
    -   a pump means (4) which is arranged in parallel to the flow restrictor (2) and the differential pressure sensor (3) and which is constructed such that it is capable of superimposing an alternating flow (5) on the flow to be measured;
    -   a volumetric flow rate determination means (512) which derives a quantity (FV) representative of a fluid property from the alternating or pulsating differential pressure signal which is generated by the differential pressure sensor (3) and which is essentially proportional to the alternating flow (5), and which derives the volumetric flow rate (V) from the steady component of the differential pressure signal ($\Delta p$) generated by the differential pressure sensor (3) as well as from the quantity (FV) representative of the fluid property.

3.  Pump assembly as in claim 2, wherein the differential pressure sensor (3) is provided with a first diaphragm (410) having an opening (410a) which extends through said first diaphragm (410) at right angles to the main surfaces thereof, said first diaphragm (410) being provided with first elements for measuring the diaphragm deflection.

4.  Pump assembly as in claim 3, wherein the pump means (4) is provided with second and third diaphragms (412, 414) and with first and second actuating members arranged on one side of the respective diaphragm (412, 414), said actuating members being used for actively deflecting said second and third diaphragms (412, 414) and said second and third diaphragms (412, 414) being provided with second and third elements for measuring the diaphragm deflection.

5. Pump assembly as in claim 4, wherein the first, second and third elements for measuring the diaphragm deflection include one or several strain gauges.

6. Pump assembly as in claim 4 or 5, wherein the first and second actuating members are controlled with an 180o phase shift for achieving thus a movement of the second and third diaphragms (412, 414) in opposite directions.

7. Pump assembly as claim 2, wherein a first chamber (416) is defined by the first and second diaphragms (410, 412) and a sensor housing (418); a second chamber (420) is defined by the first and second diaphragms (410, 414) and the sensor housing (418); the first and the second chambers (416, 420) are interconnected via the flow restrictor (2); a means (422) is provided for supplying the fluid to be measured to the first chamber (416), and a means (424) is provided for discharging the fluid to be measured from the second chamber (420).

8. Pump assembly as in claim 7, wherein the sensor housing (418) is provided with a flow passage (426) for defining the flow restrictor (2), said flow passage (426) extending from the first chamber (416) along one main side of the first diaphragm (410) through the opening (410a) of said first diaphragm (410) and along the other main side of said first diaphragm (410) to the second chamber (420).

9. Pump assembly as in claim 7, wherein the sensor housing (418) has a structural design of such a nature that the free diaphragm surface of the second and third diaphragms (412, 414) is larger than that of the first diaphragm (410).

10. Pump assembly as in claim 7, wherein the supply means (422) includes an inlet capillary leading through a cover portion (428) and the sensor housing (418) into the first chamber (416); and the discharge means (424) includes an outlet capillary leading through the sensor housing (418) and the cover portion (428) and then out of the second chamber (420).

11. Pump assembly as in claim 4, wherein the first and second actuating members of the pump means (4) have the following features: a first rear wall (430) consisting of a thermally conductive material, said first rear wall (430) being arranged on one lateral surface of the sensor housing (418) and having a plurality of ribs (430a); a second rear wall (432) consisting of a thermally conductive material, said second rear wall (432)

being arranged on the other lateral surface of the sensor housing (418) and having a plurality of ribs (432a); a third chamber (434) defined by the second diaphragm (412), the first rear wall (430) and the sensor housing (418), said third chamber (434) containing a liquid; a fourth chamber (436) defined by the third diaphragm (414), the second rear wall (432) and the sensor housing (418), said fourth chamber (436) containing a liquid; and first and second Peltier elements (438, 440) for cyclically heating and cooling down the liquids contained in the third and fourth chambers (434, 436).

12. Pump assembly as in claim 4, wherein the first and second actuating members of the pump means (4) each include a piezoelectric actuating element.

13. Pump assembly as in claim 4, wherein the first and second actuating members of the pump means (4) each include a piston which is moved by magnetic fields.

14. Pump assembly as in claim 4, wherein the first and second actuating members of the pump means (4) are provided with chambers which are acted upon by a pressure.

15. Pump assembly as in claim 4, wherein the pump means comprise means for electrical heating of chambers.

16. Pump assembly as in any of the preceding claims, wherein the stationary component and the movable component are designed as a radial sliding bearing (100), with the movable component being a shaft (10), and the stationary component being a sleeve (20).

17. Pump assembly as in claim 16, wherein the radial sliding bearing is designed as a tilting pad bearing, comprising a plurality of tilting pads (22a, 22b, 22c).

18. Pump assembly as in any of claims 1 to 14, wherein the stationary component (20) and the movable component (10) are designed as an axial sliding bearing.

19. Pump assembly as in any of the preceding claims, wherein the inlet arrangement (30) comprises a hole, and wherein the outlet arrangement is a delivery hole at the surface of the stationary component (20) which merges into a hydraulic capillary.

20. Pump assembly as in any of the preceding claims, wherein leakage from the sliding space (50) is reused.

21. Pump assembly as in any of the preceding claims, wherein several sliding bearings are arranged in parallel.

22. Use of a pump assembly as in any of the preceding claims as high pressure pump for a liquid chromatograph.

FIG.1A

FIG.1B

FIG.1C

FIG. 2

| PRESSURE (bar) | 8 | 7 | 6,5 | 5 | 4 |
|---|---|---|---|---|---|
| $\dot{V}$ ($\mu l$/min) | 0 | 10 | 30 | 52 | 115 |

EP 0 708 246 A2

FIG. 3

FIG. 4

FIG. 5 B

FIG. 5A

514a     1     514b     514     500

FLUID SENSOR
DEVICE

516     518

$k_1$

CIRCUIT FOR
DETERMINING
THE FLUID
PROPERTIES

510a     512a

520

CIRCUIT FOR
DETERMINING
THE VOLUMETRIC
FLOW RATE

512c

V

510     $k_2$     512b     512

FV

## FIG. 10

3     1

2

P

4

## FIG. 6

FIG. 7

FIG. 8

FIG. 9